Europäisches Patentamt

European Patent Office

Office européen des brevets

(11) Publication number: 0 336 300
A1

# EUROPEAN PATENT APPLICATION

(21) Application number: 89105647.5

(22) Date of filing: 30.03.89

(51) Int. Cl.⁴: H04Q 11/04 , H04Q 3/68

(30) Priority: 08.04.88 PL 271713

(43) Date of publication of application:
11.10.89 Bulletin 89/41

(84) Designated Contracting States:
DE FR GB IT NL SE

(71) Applicant: POLITECHNIKA POZNANSKA
pl. M. Sklodowskiej-Curie 5
60-965 Poznan(PL)

(72) Inventor: Jajszczyk, Andrzej
ul. Bulgarska 76/1
PL-60-321 Poznan(PL)
Inventor: Kabacinski, Wojciech
Os. Bohaterów II Wojny Swiatowej 35/69
PL-61-386 Poznan(PL)

(74) Representative: Ebbinghaus, Dieter et al
Patentanwälte v. Füner, Ebbinghaus, Finck
Mariahilfplatz 2 & 3
D-8000 München 90(DE)

(54) Multi-module switching network.

(57) A multi-module switching network particularly useful for telecommunication systems, and characterized by a reasonable number of used elements is composed of two subnetworks (1, 2), each of which consists of two one-sided switching modules connected in series (3, 4, and 5, 6, respectively). Each of these modules is either a single triangular switch, or a set of triangular switches, or constitutes a single- or multi-stage switching network. The subnetworks (1, 2) are interconnected to each other by means of connecting modules (7, 8) which are identical to the last modules (4 and 6, respectively) of subnetworks (1, 2).

The terminals of the connecting modules (7, 8) are separated into incoming and outgoing PCM links and are connected to links of the last modules (4, 6) of the subnetworks (1, 2).

Fig. 1

# MULTI-MODULE SWITCHING NETWORK

This invention relates to digital switching systems. In particular it relates to a one-sided multistage switching network composed of triangular switches, which is especially useful for the construction of a telecommunication system and for telephone exchanges.

A switching network of a modern digital exchange should offer possibilities for expanding the capacity during its operation. In the switching networks, such as described in the publication J. M. Cotton, K. Giesken, A. Lawrence and D. C. Upp "ITT 1240 Digital Exchange: Digital Switching Network", Electrical Communication, 1981, 56, pages 148 to 160, the triangular switches are grouped in four stages. Some of the terminals of each switch in one stage are connected with the terminals of the switches in the next stage, while remaining terminals of these switches are connected with the terminals of the switches in the previous stage. The terminals of the switching network are formed by some terminals of the switches in the first stage of the switching network. In another solution as described in a publication of A. Jajszczyk "On Triangular Digital Switching Networks", Proc. 1987 Int. Conf. on Communication Technology, Nanjing, P.R. China, 1987, pages 982 to 985, switches in some stages or in all stages are replaced with one-stage full access switching blocks. These blocks are composed of triangular switches.

In the switching network presented above the expansion of capacity is achieved by replacing the last stage switches with two-stage or one-stage switching networks. During these changes some cabling has to be changed. In another solution as described in a publication of P. C. Richards "Cost Effective Digital Switching for up to 100000 Lines", Electrical Communications 1979, 54, pages 205 to 214, expansion of the capacity is achieved by adding the next stage of triangular switches, and connecting them to the switches of the last stage of the existing network. These connections could be done if some terminals of the switches in the last stage of the network were left unused.

In another approach as described in the patent application: A. Jajszczyk and W. Kabaciński "Multistage Digital Switching Network", Patent Application No.861108282.0-, the switching networks are composed of at least two identical subnetworks, which are interconnected to each other. Each of these subnetworks consists of three modules connected in series. The inputs of the middle module of each subnetwork are connected through connecting modules with the outputs of the middle module of each of the remaining subnetworks. This solution enables constructing the switching network of any capacity, although only two-sided switching elements can be used in such a network.

A purpose of the invention was the elabotation of such a one-sided switching network, wchich is characterized by a high reliability and should be composed of standard switching elements at low complication of the system and at low cost of production, and which enables to expand the capacity of a one-sided switching network without affecting existing cabling.

A multi-module switching network according to the invention is composed of subnetworks, each of which consists of two one-sided switching modules connected in series. Each of the said modules is either a single triangular switch or a set of "n" triangular switches, where n is an integer, or constitutes a single-or multi-stage one-sided switching network. The connecting modules which interconnect the subnetworks to each other are identical to the last module of the subnetworks.

The terminals of the connecting modules are separated into incoming and outgoing PCM links. The inputs of the last module of one subnetwork are connected with incoming PCM links of one of the connecting modules, while the inputs of the last module of the second subnetwork are connected with incoming PCM links of the second connecting module. The outputs of each of the last modules of the subnetworks are connected with the outgoing PCM links of this connecting module whose incoming PCM links are not connected with this subnetwork.

This structure makes it possible to construct one-sided switching networks of any capacity and characterized by a high reliability and possibility of expanding the capacity by adding some subnetworks. In comparison with solutions based on the duplication of a complete switching network, this invention requires a fewer number of switching elements.

Embodiments of the invention will now be described with reference to the accompanying drawings wherein:

Fig. 1 shows a block diagram of a general multistage one-sided network having a capacity of N PCM links,

Fig. 2 shows a diagram of a two-stage network having a capacity of 128 PCM links.

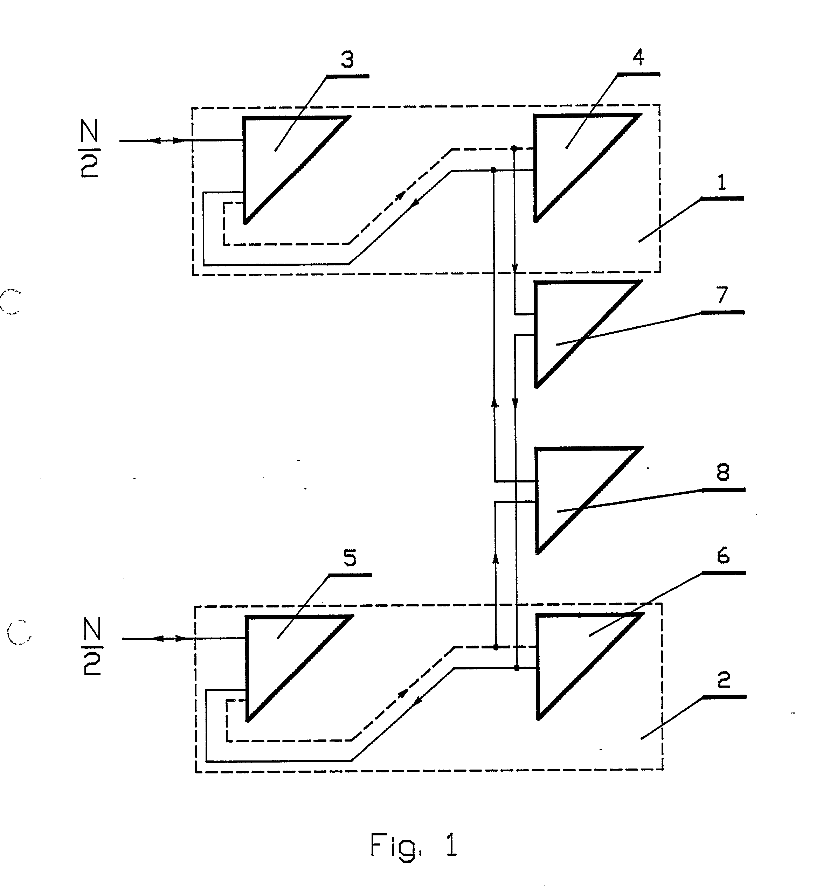

The one-sided switching network of Fig. 1 consists of two subnetworks 1 and 2, each of these subnetworks having a capacity of N/2 × N/2 PCM links. The first subnetwork 1 comprises triangular switches 3 and 4, connected in series, while the second subnetwork 2 comprises triangular switches 5 and 6. The subnetworks 1 and 2 are interconnected by means of triangular switches 7 and 8. The terminals of the triangular switches 7 and 8 are separated into incoming and outgoing PCM links. The incoming PCM links of the triangular switch 7 are connected with the inputs of the last triangular switch 4 of the first subnetwork 1, while the outgoing PCM links of this switch 7 are connected with outputs of the last triangular switch 6 of th second subnetwork 2. Similarly, the incoming PCM links of the triangular switch 8 are connected with the inputs of the last triangular switch 6 of the second subnetwork 2, while the outgoing PCM links of this switch 8 are connected with outputs of the last triangular switch 4 of the first subnetwork 1.

The additional subnetwork can be connected parallelly to the subnetworks 1 and 2, and interconnected to each other in the way described above. Such a structure makes it possible to expand the capacity of the switching network and preserve its high reliability.

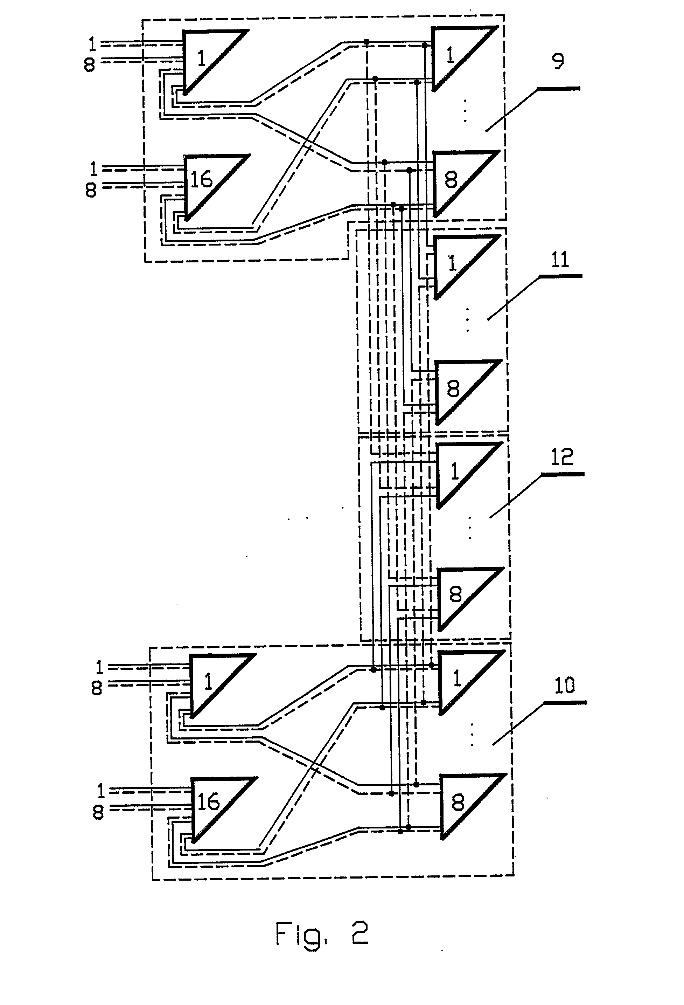

The switching network of Fig. 2 has two identical subnetworks 9 and 10, which are composed of triangular switches having capacity of 16 PCM links. Each of the subnetworks 9 and 10 is composed of two modules. Each of the external modules comprises sixteen triangular switches, first eight terminals of which constitutes the terminals of the subnetworks 9 and 10, while the remaining eight terminals are used for internal connections. Each internal module comprises eight triangular switches whose terminals are connected with the corresponding terminals of the external module of the same subnetwork, and the corresponding incoming and outgoing PCM links of triangular switches of two connecting modules 11 and 12 are connected to some inputs and outputs of these eight switches of the subnetworks 9 and 10.

## Claims

1. A one-sided switching network composed of at least two identical subnetworks connected to each other by means of connecting modules, characterized in that each of the subnetworks (1, 2) comprises two one-sided switching modules (3, 4 and 5, 6, respectively) connected in series, each of which is either a triangular switch or a set of "n" triangular switches, where "n" is an integer, or a one-or multi-stage one-sided switching network, and the connecting modules (7, 8) which are identical, to at least the last module (4 and 6, respectively) of the subnetworks (1, 2).

2. A one-sided multistage switching network according to claim 1, wherein terminals of both modules (7, 8) which interconnect the subnetworks (1, 2) are separated into incoming and outgoing PCM links; and, the incoming PCM links of the first connecting module (7) are connected with the inputs of the last module (4) of the first subnetwork (1), while outgoing PCM links of this first connecting module (7) are connected with outputs of the last module (6) of the second subnetwork (2); incoming PCM links of the second connecting module (8) are connected with inputs of the last module (6) of th second subnetwork (2), while the outgoing PCM links of this second connecting module (8) are connected with outputs of the last module (4) of the first subnetwork (1).

37568.8

Fig. 1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y,D | PROCEEDINGS 1987 INTERNATIONAL CONFERENCE ON COMMUNICATION TECHNOLOGY, pages 982-985, Nanjing, CN; A. JAJSZCZYK: "On triangular digital switching networks" <br> * Whole document * | 1,2 | H 04 Q 11/04 <br> H 04 Q 3/68 |
| Y,D | EP-A-0 212 431 (POLITECHNIKA POZNANSKA) <br> * Whole document * | 1,2 | |
| A | ELECTRONICS LETTERS, vol. 22, no. 2, January 1986, pages 93-94, Stevenage, Herts, GB; A. JAJSZCZYK et al.: "Reliable digital switching networks" <br> * Whole document * | 1,2 | |
| A | IEEE TRANSACTIONS ON COMMUNICATIONS, vol. COM-35, no. 12, December 1987, pages 1383-1384, New York, US; A. JAJSZCZYK: "One-sided switching networks composed of digital switching matrices" <br> * Whole document * | 1,2 | TECHNICAL FIELDS SEARCHED (Int. Cl.4) <br><br> H 04 Q |

The present search report has been drawn up for all claims

| Place of search | Date of completion of the search | Examiner |
|---|---|---|
| THE HAGUE | 07-06-1989 | DE MUYT H.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)